# EUROPEAN PATENT APPLICATION

(11) **EP 2 947 137 A1**
(43) Date of publication of application: **25.11.2015**
(21) Application number: 15167686.3
(22) Date of filing: 13.05.2015
(51) Int. Cl.: C10M 171/00, C10M 107/24

(54) **USE OF PVE LUBRICANTS WITH SUBSTITUTE REFRIGERANTS IN AMOBILE AIR CONDITIONING SYSTEM**

(30) Priority: 14.05.2014 US 201414277264
(71) Applicant: Ford Global Technologies, LLC, Dearborn, MI 48126 (US)
(72) Inventor: Patti, Angelo, Pleasant Ridge, MI Michigan 48069 (US); Koberstein, Manfred, Troy, MI Michigan 48098 (US); Lambert, Steven, Washington, MI Michigan 48094 (US); Sakowicz, Edward, Dearborn Heights, MI Michigan 48127 (US); Johnston, William, Oakland, MI Michigan 48178 (US)
(74) Representative: Harrison IP Limited

(57) **Abstract**

A heat transfer composition for use in a mobile air-conditioning system in a vehicle, includes a first component comprised of a hydrofluoroolefin refrigerant. A second component of the composition includes a polyvinylether lubricant. The heat transfer composition is compatible for use in a mobile air-conditioning system when the mobile air-conditioning system is powered by a mechanically driven compressor, and is also compatible for use in the mobile air-conditioning system when the mobile air-conditioning system is powered by an electrically driven compressor built-in to the mobile air-conditioning system.

## Description

### FIELD OF THE INVENTION

The present invention generally relates to compositions for use in mobile air conditioning (MAC) systems, and more particularly, to refrigerant compositions comprising a substitute refrigerant and a polyvinylether (PVE) lubricant for use in MAC systems having a compressor that is either belt driven or electrically driven.

### BACKGROUND OF THE INVENTION

Fluorocarbon based fluids, such as refrigerants, have been used in a variety of applications, such as air conditioning, refrigeration systems, and other heat transfer systems. As concerns increase regarding the use of fluorocarbon based fluids in such systems, substitute refrigerants have been developed and marketed as a more environmentally friendly option as compared to refrigerants having chlorofluorocarbons (CFCs) and hydrofluorocarbons (HCFCs). While these substitute refrigerants generally provide the necessary heat transfer properties for use in a variety of applications, there compatibility with various lubricants for use in different systems is varied, such that different lubricants are often needed for use in particular systems. For example, when using a hydrofluoro-olefin (HFO) refrigerant, a polyalkylene glycol (PAG) lubricant is generally used with a mechanical belt driven compressor in a MAC system. The same refrigerant is often used with a polyolester (POE) lubricant in an electrically driven compressor in a MAC system due to the low resistivity of PAG lubricants. Generally, an HFO refrigerant is not used with a POE lubricant in belt driven compressors due to material compatibility concerns with elastomers commonly used in MAC systems. Thus, a refrigerant composition is desired wherein a substitute refrigerant is used in combination with a lubricant that can be used in both mechanically belt driven compressors, as well as electrically driven compressors.

### SUMMARY OF THE INVENTION

According to the present invention, there is provided a heat transfer composition for use in a mobile air-conditioning system in a vehicle, as set forth in claim 1 of the appended claims.

These and other aspects, objects, and features of the present invention will be understood and appreciated by those skilled in the art upon studying the following specification, claims, and the embedded drawing.

### DETAILED DESCRIPTION OF THE PREFERRED EMBODIMENTS

The present invention relates to compositions comprising a substitute refrigerant and a lubricant for use in MAC systems. The substitute refrigerant, for purposes of the present invention, is generally a hydrofluoroolefin (HFO) refrigerant which includes all tetrafluoropropenes, such as 2,3,3,3-tetrafluoropropene, HFO-1234yf or R-1234yf. As used throughout this disclosure, the substitute refrigerant will generally be referred to as HFO-1234yf, although this designation is exemplary only and other substitute refrigerants may be used in conjunction with the present invention. HFOs are chemical compounds that are composed of hydrogen, fluorine and carbon. HFOs are distinguished from hydroflorocarbons (HFCs) as HFOs are derivatives of alkenes (olefins) rather than alkanes.

HFO-1234yf is a hydrofluoroolefin with the formula CH₂=CFCF₃ as shown in Formula I.

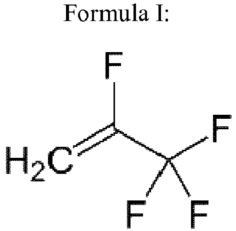

As a substitute refrigerant, HFO-1234yf has been used as a replacement for R134a in automobile air conditioning systems. HFO-1234yf is a preferred substitute as it has a Global Warming Potential of less than one. HFO-1234yf, as used in MAC systems, meets the European Parliament MAC directive 2006-40-EC. Further, HFO-1234yf qualifies for A/C credits in the United States under Light-Duty Vehicle Greenhouse Gas Emissions and Corporate Average Fuel Economy Standards. As such, HFO-1234yf is a suitable substitute refrigerant for use with the present composition.

When preparing a composition for use in a MAC system, several issues related to the compatibility of a refrigerant and the associated lubricant must be considered to optimize system performance. These factors include solubility, misability, toxicity, decomposition, resistivity, lubricity, and consideration of the materials which will come into contact with the composition within the MAC system.

With regards to solubility, the chosen lubricant should be sufficiently soluble in the substitute refrigerant over a suitable range of operating temperatures realized in belt driven and inverter driven compressors. Both belt driven (mechanical) and inverter driven (electrical) compressors are used in MAC systems in various vehicles. Proper solubility between the lubricant and the substitute refrigerant allows the lubricant to properly lubricate the system by lowering viscosity of the lubricant. Proper solubility further helps to retain the efficiency of the system by avoiding build-up in any one part of the MAC system. Applicants have found that the solubility between HFO-1234yf and a PVE lubricant provides the solubility necessary for working in both a belt driven or inverter driven MAC system. In composition, an amount of substitute refrigerant (HFO-1234yf) is at least about 50% of the total composition, and more preferably, at least about 70% of the total composition. The PVE lubricant will generally comprise the majority of the remaining percentage of the total composition as used with the substitute refrigerant. Further, the operating temperature range of the composition may be from about -7°C or -40°C to about 130°C for use in a variety of systems in varying conditions.

As noted above, the solubility of the lubricant in the substitute refrigerant lowers the viscosity of the lubricant for improved lubricity of the system, however, it is noted that the substitute refrigerant should not decrease the viscosity of the lubricant in such a manner that there is insufficient lubrication in the compressor of the MAC system. Insufficient lubrication can lead to increased wear and possible damage to the MAC system. The lubricant should be configured to provide a balance between lubricity and viscosity to ensure proper compatibility with the chosen compressor. Applicants have found that a heat transfer composition of HFO-1234yf and a PVE lubricant in the amounts indicated above, provides suitable solubility, misability and viscosity necessary for proper functioning of either a belt driven compressor or an inverter driven compressor. Viscosity of the PVE lubricant used with the present invention may have a viscosity index of about 32 or 68. Other viscosities may work with present composition as well.

Particularly, applicants have found that the miscibility of a PVE lubricant in HFO-1234yf is better than the miscibility of PAG lubricants in HFO-1234yf. This increased miscibility can allow for lower quantities of PVE lubricant to be used in the MAC system. Generally, as used in a MAC system, the lubricant will reduce the heat transfer capacity of the heat exchangers. Thus, a greater coefficient of performance (COP) is realized when the amount of lubricant in a MAC system is reduced. Such an improved COP is found in the composition of the present invention.

Specifically, the higher miscibility of a PVE lubricant in HFO-1234yf results in better overall system lubrication, as certain parts of the compressor are coated with materials to reduce friction. These materials may include metals such as tin on the swash plate or polytetrafluoroethylene (PTFE or Teflon) on the pistons which may be incompatible with PAG or POE lubricants. The composition of the present invention using a PVE lubricant with HFO-1234yf provides for a stable composition even when brought into contact with metal parts and elastomeric materials. This improved lubrication and stability found in the present composition has the potential to allow for lower cost coatings.

With respect to resistivity of the substitute refrigerant and lubricant composition, referring to either the electric insulation or volume resistivity, an appropriate resistivity level is very important for use with hermetic compressors. With the increased popularity of electric cars, compressors driven by an electric inverter are becoming more common. As distinguished from a belt drive compressor, the electric inverter compressor is driven by an electric motor that is built into the compressor housing and powered by voltage from the vehicle's power supply system. In such systems, motor windings are exposed to, or otherwise come in contact with, the lubricant. Thus, the lubricant most have good electrical insulating properties to avoid possible current leakage from the motor windings. Suitable electrical insulating properties are found in a generally high volume resistivity of about 1x10¹⁴ ohm-cm. As noted above, PAG lubricants have a low resistivity, about 1x10¹⁰ ohm-cm, such that the low opposition to the movement of electric charge within a PAG lubricant increases the chances of shorting a high voltage inverter driven compressor, which could lead to not only a shutdown of the MAC system, but a shutdown of the entire vehicle that is electrically powered. Due to this low resistivity of PAG lubricants, POE lubricants have generally been used in electric or hybrid vehicles due to the comparably higher resistivity of the POE lubricant. The low resistivity of a PAG lubricant is of such concern that cross-contamination of even 1% PAG oil in a system can lower the resistivity enough to damage the MAC system. Applicants have found that using a PVE oil with the HFO-1234yf refrigerant provides for the high resistivity necessary for proper functioning of an inverter driven compressor, while also having suitable material compatibility with elastomer materials found in belt driven compressor systems. Thus, Applicants submit that the composition of the present invention is suitable for use with both a belt drive MAC system and an inverter driven MAC system in a vehicle. Using a single substitute refrigerant (HFO-1234yf) and a single lubricant (PVE lubricant) to form a composition for both belt driven and electric driven compressors helps to avoid cross-contamination of PAG and POE lubricants which are suitable for use only with specific compressor types, as noted above.

As further noted above, a significant benefit of the PVE lubricant is the high resistivity for suitable use with electric compressors. In this way, the PVE lubricant is similar to POE lubricants, but, also noted above, the PVE lubricant dose not suffer from the same material compatibility issues found in POE lubricants. In a mechanically belt driven compressor, a rubber based inner liner used with low permeation hose materials is generally not compatible with POE lubricants. The present composition, however, is compatible with such an inner liner much like a composition using a PAG lubricant. Currently, POE lubricants require a hose construction with a nylon inner liner for avoiding material compatibility issues. These nylon-lined hoses are more difficult to crimp to aluminum lines and have undesired higher permeation levels. Since EPA A/C Green House Gas (GHG) credits are based partially on the permeation rates of the hoses used in the MAC system, the present composition of PVE lubricant and HFO-1234yf results in higher credits as used with low permeation hoses. Such a system is better for the environment overall.

Further, a common lubricant for use between electric and belt driven compressors reduces complexity in the assembly plant and during vehicle service at dealerships reducing cost and the potential for errors. The PVE lubricant in the composition of the present invention provides the necessary cross compatibility with electric and belt driven compressors while also exhibiting the desired ecological benefits derived from a system having a substitute refrigerant such as HFO-1234yf.

## Claims

1. A heat transfer composition for use in a mobile air-conditioning system in a vehicle, comprising:
a first component including a hydrofluoroolefin refrigerant;
a second component including a polyvinyl ether lubricant; and
wherein the heat transfer composition is compatible for use in the mobile air-conditioning system when the mobile air-conditioning system is powered by a mechanically driven compressor, and further wherein the heat transfer composition is compatible for use in the mobile air-conditioning system when the mobile air-conditioning system is powered by an electrically driven compressor.

2. The heat transfer composition of claim 1, wherein the composition includes a resistivity of about 1x10¹⁴ ohm-cm.

3. The heat transfer composition of claim 1 or 2, wherein the mechanically driven compressor is a belt driven compressor.

4. The heat transfer composition of claims 1 to 3, wherein the composition is compatible with elastomeric and metallic components of the mobile air-conditioning system.

5. The heat transfer composition of any preceding claim, wherein the electrically driven compressor is an inverter driven compressor.

6. The heat transfer composition of any preceding claim, wherein the second component is soluble in the first component.

7. The heat transfer composition of any preceding claim, wherein the heat transfer composition has a viscosity index of 32.

8. The heat transfer composition of claims 1 to 6, wherein the heat transfer composition has a viscosity index of 68.

9. The heat transfer composition of any preceding claim, wherein the composition exhibits an operating temperature range from about -7°C to about 130°C.

10. The heat transfer composition of claims 1 to 8, wherein the composition exhibits an operating temperature range from about -40°C to about 130°C.

11. A heat transfer composition for use in a mobile air-conditioning system in a vehicle, comprising:
a first component including a substitute refrigerant of the HFO-1234yf type;
a second component including a polyvinyl ether lubricant; and
wherein the heat transfer composition is compatible for use in the mobile air-conditioning system when the mobile air-conditioning system is powered by a mechanically driven compressor, and further wherein the heat transfer composition is compatible for use in the mobile air-conditioning system when the mobile air-conditioning system is powered by an electrically driven compressor.
